# EUROPÄISCHE PATENTSCHRIFT

(11) **EP 1 003 266 B1**
(45) Veröffentlichungstag und Bekanntmachung des Hinweises auf die Patenterteilung: **12.04.2006**
(21) Anmeldenummer: 99122702.6
(22) Anmeldetag: 15.11.1999
(51) Int. Cl.: H02J 17/00, B64B 1/00

(54) **Flugkörper mit schwenkbarer Anordnung des Solarzellenpanels**
Flying body equipped with swivel-mounted solar cell panels
Objet volant équipé de panneaux solaires pivotants

(30) Priorität: 17.11.1998 DE 19853073
(43) Veröffentlichungstag der Anmeldung: 24.05.2000
(73) Patentinhaber: Fraunhofer-Gesellschaft zur Förderung der angewandten Forschung e.V., 80686 München (DE)
(72) Erfinder: Gerhäuser, Heinz, Prof. Dr., 91344 Waischenfeld (DE)
(74) Vertreter: Leonhard, Frank Reimund

(56) Entgegenhaltungen:
- EP-A- 0 385 921
- WO-A-97/33790
- GB-A- 2 082 995
- US-A- 4 364 532

## Beschreibung

Die vorliegende Erfindung betrifft einen Flugkörper zum im wesentlichen ortsfesten Aufenthalt bis in die Stratosphäre, sowie ein damit arbeitendes System.

**EP-A 913 908** (Fraunhofer), die zum Stand der Technik nach Art. 54(3) EPÜ gehört, offenbart einen Flugkörper zum im wesentlichen ortsfesten Aufenthalt bis in die Stratosphäre, mit
- Einrichtungen, die geeignet sind, den Flugkörper unter Ausnutzung des aerostatischen Auftriebs und/oder von aerodynamischen Effekten auf einer vorgegebenen Höhe zu halten;
- Einrichtungen, die geeignet sind, den Flugkörper auf einer vorgegebenen Längen- und Breitenposition zu halten; und
- Mitteln, um den Flugkörper von einer Versorgungsstation aus drahtlos über elektromagnetische Wellen mit Energie zu versorgen, wobei die Mittel mindestens eine photoelektrische Umwandlungsvorrichtung (1) umfassen.

Ein Flugkörper ist im Allgemeinen mit mindestens einer Empfangs- und Sendestation ausgestattet und kann somit als mobile Informationsübertragungsstation und mit weiterhin einer Versorgungsstation als Informationsübertragungssystem ausgestaltet sein. Diese sind geeignet, Informationen, beispielsweise Nachrichten und Fernsehsendungen bei niedriger Sendeleistung und mit großer Reichweite zu übertragen.

Die Erfindung betrifft weiterhin eine mobile Datenerfassungs- und -übertragungsstation, die mit geeigneten Sensoren zur Erfassung von physikalischen oder chemischen Messwerten sowie von Bildinformation bestückt ist, wie beispielsweise eine mobile Wetterdatenstation und ein Wetterinformationssystem, durch die Wetterdaten zentral erfasst und übertragen werden können.

Aus **US-A 4,697,761** ist ein ultraleichtes Flugzeug für sehr hohe Höhen bekannt, welches durch Flügel auf einer vorbestimmten Höhe gehalten wird. Dabei kann ein Ballon vorgesehen sein, um das Flugzeug in die vorbestimmte Höhe zu bringen. Dieser ist derart gestaltet, dass, sobald die vorbestimmte Höhe erreicht ist, das Flugzeug von dem Ballon freigesetzt wird. Das aus dieser Patentschrift bekannte Flugzeug fliegt bei Geschwindigkeiten von 70 bis 200 Meilen pro Stunde, es ist also nicht für den stationären Aufenthalt ausgelegt. Auf der Oberseite der Flügel des Flugzeugs sind Solarzellen angeordnet, während auf der Unterseite, d.h. der der Erde zugewandten Seite der Flügel, Ferninfrarot-Zellen zur photoelektrischen Umwandlung von Ferninfrarot-Strahlung angeordnet sind.

Des weiteren ist aus **US-A 5,503,350** ein Flugzeug zur Verwendung als eine stationäre Kommunikations-Plattform bekannt. Auch dieses Flugzeug ist mit Flügeln ausgestattet, um auf einer vorbestimmten Höhe gehalten zu werden. Der im wesentlichen stationäre Aufenthalt wird dadurch realisiert, dass das Flugzeug im Muster einer 8 über der Bodenstation fliegt. Zusätzlich enthält das Flugzeug eine Antenne, die ein von der Bodenstation erzeugtes Mikrowellen-Signal bei 35 GHz in Gleichstrom umwandelt.

**US-A 4,364,532** (Stark) offenbart einen Flugkörper zum im wesentlichen ortsfesten Aufenthalt bis in die Stratosphäre, mit
- Einrichtungen (2), die geeignet sind, den Flugkörper unter Ausnutzung des aerostatischen Auftriebs und/oder von aerodynamischen Effekten auf einer vorgegebenen Höhe zu halten;
- Einrichtungen, die geeignet sind, den Flugkörper auf einer vorgegebenen Längen- und Breitenposition zu halten; und
- mindestens eine photoelektrische Umwandlungsvorrichtung, wobei Mittel vorgesehen sind, die optimal in Richtung einer einfallenden Energiestrahlung positioniert werden können, so dass die aktive Fläche der photoelektrischen Umwandlungsvorrichtung optimal von der einfallenden Energiestrahlung getroffen wird.

**EP-A 385 921** (Gamzon), **GB-A 2 082 995** (McNulty) und **WO-A97/33790** (Wong) offenbaren jeweils einen Flugkörper zum im wesentlichen ortsfesten Aufenthalt bis in die Stratospähre, **mit**
- Einrichtungen, die geeignet sind, den Flugkörper unter Ausnutzung des aerostatischen Auftriebs und/oder von aerodynamischen Effekten auf einer vorgegebenen Höhe zu halten;
- Einrichtungen, die geeignet sind, den Flugkörper auf einer vorgegebenen Längen- und Breitenposition zu halten; und
- mindestens einer photoelektrischen Umwandlungsvorrichtung.

Der in **EP-A 913 908** offenbarte Flugkörper zum im wesentlichen ortsfesten Aufenthalt bis in die Stratosphäre umfasst Einrichtungen, die geeignet sind, den Flugkörper unter Ausnutzung des aerostatischen Auftriebs und/oder von aerodynamischen Effekten auf einer vorgegebenen Höhe zu halten, Einrichtungen, die geeignet sind, den Flugkörper auf einer vorgegebenen Längen- und Breitenposition zu halten, und Mittel, um den Flugkörper von einer Versorgungsstation aus drahtlos mit Energie zu versorgen.

Ein beanspruchter Flugkörper soll im wesentlichen ortsfest positioniert sein. "Im wesentlichen" ortsfest heißt dabei, "ortsfest, bis auf für die jeweilige Anwendung unerhebliche Schwankungen oder Abweichungen". Der Flugkörper umfasst daher Einrichtungen, die geeignet sind, den Flugkörper unter Ausnutzung des aerostatischen Auftriebs und/oder von aerodynamischen Effekten auf einer vorgegebenen Höhe zu halten. Diese können beispielsweise durch Auftriebkörper, insbesondere Ballons realisiert sein. Beispielsweise kann für eine Abwärtsbewegung der Auftrieb des Ballons reduziert und für eine Aufwärtsbewegung der Auftrieb des Ballons erhöht werden. Bei einem gasgefüllten Ballon kann dies durch Ablassen von Gas bzw. durch Einfüllen von Gas aus einer Vorratsflasche geschehen. Ferner umfasst dieser Flugkörper Einrichtungen, die geeignet sind, den Flugkörper auf einer vorgegebenen Längen- und Breitenposition zu halten. Darüber hinaus soll der Flugkörper nur während seines Betriebszustands ortsfest positioniert sein.

Gegenüber dem zitierten Stand der Technik soll **die Aufgabe gelöst werden,** eine Energieversorgung des Flugkörpers zu optimieren und dabei optimal auf eine Einstrahlung von Energie ausrichten zu können.

Der erfindungsgemäße Flugkörper hat Mittel, um den Flugkörper von einer Versorgungsstation aus drahtlos über elektromagnetische Wellen mit Energie zu versorgen, die mindestens eine photoelektrische Umwandlungsvorrichtung umfassen, die schwenkbar ist, so dass die aktive Fläche der photoelektrischen Umwandlungsvorrichtung optimal in Richtung einer einfallenden Energieeinstrahlung positioniert werden kann.

Der Flugkörper wird von einem stationären Startpunkt aus, der sich üblicherweise auf der Erde befindet, zu seiner vorbestimmten Position gebracht. Dazu ist er vorzugsweise mit einer zusätzlichen Energievorratseinrichtung, beispielsweise einem Brennstofftank oder einem Akkumulator ausgestattet, die die dazu notwendige Energie liefert und die vorzugsweise derart bemessen ist, dass sie zumindest weitestgehend erschöpft ist, sobald die vorbestimmte Position erreicht ist. Es ist aber auch möglich, dass ein separates Transportmittel, beispielsweise ein Flugzeug, ihn zu seiner vorbestimmten Position bringt.

Sobald er die vorbestimmte Höhe erreicht hat, was beispielsweise mit Hilfe eines Höhenmessers oder durch ein satellitenunterstütztes Ortungssystem bestimmt werden kann, werden vorzugsweise mindestens ein Auftriebskörper oder aerodynamische Flügel, beispielsweise Segelflächen, entfaltet, die jeweils vorgesehen sind, um den Flugkörper auf einer vorbestimmten Höhe zu halten.

Diese Maßnahme hält den angetriebenen Flugkörper in einer bestimmten Höhe über einem bestimmten Punkt der Erdoberfläche entgegen einwirkenden Kräften.

Gemäß einer bevorzugten Ausführungsform der vorliegenden Erfindung können sich der oder die aerostatischen Auftriebskörper insbesondere aus einem aerodynamischen Flügel heraus entfalten. Das heißt, der Flugkörper fliegt zunächst wie ein Flugzeug, bis er die vorgegebene Position erreicht hat, anschließend wird der aerostatische Auftriebskörper aus dem aerodynamischen Flügel entfaltet. Dies hat den Vorteil, daß das Durchfliegen turbulenter Gebiete für den Flugkörper nicht problematisch ist.

Der Startpunkt, von dem aus der Flugkörper gestartet wird, kann sich dabei je nach Anwendungsfall auch auf dem Meer oder in der Luft befinden. Auch die Versorgungsstation zur Versorgung des Flugkörpers mit Energie befindet sich in der Regel auf der Erde an einem festen Ort, kann sich allerdings auch je nach Anwendungsfall auf dem Meer oder in der Luft an variabler Position befinden.

Der Flugkörper bezieht nun die Energie, die er braucht, um die vorbestimmte Position zu halten, direkt von der Versorgungsstation bzw. von der Sonne über drahtlose Energieübertragungstechniken unter Ausnutzung elektromagnetischer Wellen. Als Beispiel dient eine an der Versorgungsstation angebrachte Laserlichtquelle. Der erfindungsgemäße Flugkörper weist mindestens eine photoelektrische Umwandlungsvorrichtung, beispielsweise ein Solarpanel auf, die schwenkbar ist, so daß die aktive Fläche der photoelektrischen Umwandlungsvorrichtung optimal in Richtung einer einfallenden Energieeinstrahlung positioniert werden kann. Dabei heißt "optimal" in der Regel "senkrecht bis auf kleinere, gerätebedingte Abweichungen". Entsprechend ergibt sich der Vorteil, daß die photoelektrische Umwandlungsvorrichtung immer so in ihrer Neigung nachgeführt werden kann, daß sie beispielsweise die optimale Sonneneinstrahlung empfängt.

Vorzugsweise ist die photoelektrische Umwandlungseinrichtung derartig ausgebildet, daß ihre aktive Fläche einerseits in Richtung der Sonne, andererseits in Richtung einer Versorgungsstation ausgerichtet werden kann, um jeweils deren Strahlung in elektrische Energie umzuwandeln. Dadurch kann die aktive Fläche der photoelektrischen Umwandlungsvorrichtung beispielsweise tagsüber der Sonne zugewandt sein und nachts der Versorgungsstation, von wo aus der Flugkörper dann über elektromagnetische Wellen mit Energie versorgt wird. Dadurch wird eine optimale Energieversorgung des Flugkörpers gewährleistet, da einerseits die Energie der Sonne bestmöglich ausgenutzt werden kann, andererseits für die photoelektrische Umwandlung von jeweils Sonnenenergie als auch von der Versorgungsstation ausgestrahlter Energie insgesamt aber nur eine photoelektrische Umwandlungsvorrichtung benötigt wird, so daß der erfindungsgemäße Flugkörper mit möglichst wenig Gewicht und geringen Kosten realisiert werden kann. Entsprechend ist die photoelektrische Umwandlungsvorrichtung dergestalt zu realisieren, daß sie die von der Versorgungsstation ausgestrahlte Leistung als auch die von der Sonne emittierte Strahlung mit insgesamt optimalen Wirkungsgrad in Energie umwandeln kann.

Der Schwenkvorgang kann dabei jeweils zu einer bestimmten Uhrzeit durch einen Zeitgeber ausgelöst werden. Es ist aber ebenfalls möglich, daß der Schwenkvorgang, bei dem die aktive Fläche zur Erde hin positioniert wird, durch das Unterschreiten eines vorbestimmten Einstrahlungs-Grenzwerts ausgelöst wird.

Alternativ kann sich gemäß einer Ausgestaltung der vorliegenden Erfindung der Flugkörper aber auch autonom unter Verwendung von Solarzellen mit Energie versorgen und nur in Sonderfällen, wenn der flugkörperinterne Energiespeicher fast aufgebraucht ist, von der Versorgungsstation zusätzliche Energie zur Ergänzung seiner Energiereserven beziehen. In diesem Fall wird der Schwenkvorgang ausgelöst, sobald der flugkörperinterne Energiespeicher fast aufgebraucht ist.

In Zeiten, in denen die Energieversorgung des Flugkörpers nicht von der Versorgungsstation aus erfolgt, kann die Feinpositionierung des Flugkörpers unter Verwendung eines von einer Versorgungsstation oder einer Senderstation ausgesandten Informationsstrahls erfolgen.

Der Flugkörper ist ferner vorzugsweise derart gestaltet, daß er bei dem Schwenkvorgang stabil in seiner Position verharrt. Dies kann beispielsweise dadurch realisiert werden, daß zwei photoelektrische Umwandlungsvorrichtungen einen gegenläufigen Schwenkvorgang durchführen, so daß sich die dabei ergebenden Drehmomente aufheben. Allgemein gesprochen soll der Schwenkvorgang der photoelektrischen Umwandlungsvorrichtungen so durchgeführt werden, so daß sich die dabei entstehenden Drehmomente aufheben und keine Rückwirkung auf den Flugkörper verursacht wird.

Die photoelektrischen Umwandlungsvorrichtungen können darüber hinaus kardanisch gelagert sein, damit die eingestellte Neigung trotz eventuell auftretender Kräfte erhalten bleibt.

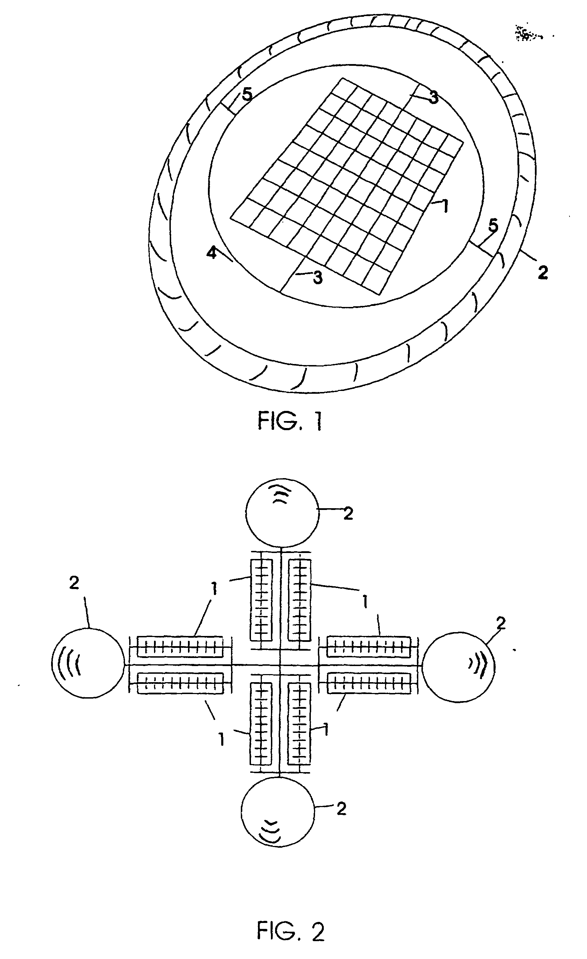

Zur Sicherstellung einer allgemeinen Stabilisierung des Flugkörpers sind bei Verwendung von aerostatischen Auftriebskörpern diese vorzugsweise über dem Schwerpunkt gelagert. Wenn dies nicht der Fall ist, wie beispielsweise in Fig. 1 und 2 gezeigt ist, sollte einerseits gewährleistet sein, daß die Zugkräfte an allen Ecken des Flugkörpers immer gleich groß sind. Dies kann erreicht werden, indem eine Regelung bereitgestellt wird, die dafür sorgt, daß beispielsweise im Fall von Fig. 2 der Auftrieb jedes der vier Auftriebskörper gleich ist. Ferner sollte eine kurzfristige und schnelle Regelung bereitgestellt werden, die eine Verschiebung des Schwerpunkts des Flugkörpers in Richtung eines zunehmenden Auftriebs gewährleistet. Dies kann beispielsweise durch eine in x- und y-Richtung verschiebbare Masse realisiert werden, die sich beispielsweise auf der der aktiven Seite der photoelektrischen Umwandlungsvorrichtung entgegengesetzten Seite des Flugkörpers befindet, die von einer entsprechenden Regelung geregelt wird. Sobald eine Störung auftritt, durch die der Auftrieb an einem Auftriebskörper zunimmt, bewegt sich die Masse in Richtung dieses Auftriebskörpers.

Gemäß Ausgestaltungen der vorliegenden Erfindung können an die Versorgungsstation eine HF-Sendeeinrichtung, beispielsweise ein Parabolspiegel, und Einrichtungen zum Einkoppeln von HF-Leistung aus der Sendeeinrichtung angebracht sein, und der Flugkörper enthält eine HF-Empfangseinrichtung zum Empfangen der übertragenen Leistung, die vorzugsweise mit der photoelektrischen Umwandlungsvorrichtung eine Einheit bildet. An dieser Stelle sei angemerkt, daß natürlich auch bei einem allgemeineren Flugkörper, d.h. insbesondere bei einem Flugkörper gemäß dem Oberbegriff von Patentanspruch 1, bei dem die Mittel, um den Flugkörper von einer Versorgungsstation aus drahtlos über elektromagnetische Wellen mit Energie zu versorgen, keine schwenkbare photoelektrische Umwandlungsvorrichtung umfassen, die HF-Empfangseinrichtung mit der photoelektrischen Umwandlungsvorrichtung eine Einheit bilden kann.

Die HF-Empfangseinrichtung kann mit der photoelektrischen Umwandlungsvorrichtung eine Einheit bilden, indem beispielsweise die einzelnen Solarzellen so gehalten werden, daß die Halterungselemente gleichzeitig als HF-Antennen wirken. Alternativ kann die HF-Antenne auch als ein Leitungselement für die photoelektrische Umwandlungsvorrichtung dienen.

Dadurch, daß HF-Empfangseinrichtung und photoelektrische Umwandlungsvorrichtung eine Einheit bilden, wird der Vorteil erzielt, daß der Flugkörper mit leichterem Gewicht und kostengünstiger bereitgestellt werden kann, da keine spezielle HF-Antenne notwendig ist. Dient das Halterungselement für die Solarzellen gleichzeitig als eine HF-Antenne, so ist die Größe der einzelnen Solarzellen vorzugsweise so zu bemessen, daß die Kantenlänge der Solarzellen in etwa der halben Wellenlänge entspricht. Genauer gesagt, sind die die Halterungselemente auf die HF-Wellenlänge abgestimmt, so daß die maximale Leistung übertragbar ist.Bei üblichen Wellenlängen im HF-Bereich von 10 cm beträgt die Kantenlänge etwa 5 cm, allerdings ist dabei zu berücksichtigen, daß der Abstand zwischen benachbarten Empfangsantennen mindestens 1 cm betragen sollte. Die Solarzellenpanele können dabei schwenkbar wie vorstehend beschrieben oder aber auch fest angeordnet sein. Die Solarzellen sollen allerdings unabhängig von der Strahlungsintensität immer eine konstante Spannung liefern. Entsprechend ist der Gleichspannungswandler zwischen Solarzelle und Bus auszulegen.

Die HF-Antenne wandelt vorzugsweise die empfangene HF-Leistung in einen Gleichstrom um. Dieser Gleichstrom und der durch die Solarzellen erzeugte Solarstrom speisen vorzugsweise denselben Bus. Dieser kann sich beispielsweise zwischen zwei benachbarten Solarzellen befinden. Bei der Gestaltung des Bus ist darauf zu achten, daß die einzelnen Stromzuführungselemente derartig ausgelegt sind, daß der Ausfall einer einzelnen Solarzelle oder einer einzelnen HF-Antenne nicht zu einem Ausfall des Gesamtsystems führt. Daher sind die einzelnen Stromzuführungselemente vorzugsweise baumartig angeordnet, und der Strom wird vorzugsweise über Dioden in den Bus eingespeist, so daß bei einem Kurzschluß der Strom beispielsweise nicht zurück in eine kurzgeschlossene Solarzelle fließen kann. Dadurch, daß der durch die HF-Antenne erzeugte Gleichstrom sowie der Solarstrom denselben Bus speisen, ergibt sich der Vorteil, daß die Verkabelung und die Energieversorgung des Flugkörpers insbesondere unter Berücksichtigung des hohen Energiebedarfs des Flugkörpers weniger aufwendig gestaltet werden können.

Die HF-Sendeeinrichtung an der Versorgungsstation kann vorteilhafterweise auch als eine phased-array Antenne ausgeführt sein.

Wenn eine Laserlichtquelle verwendet wird, so muß diese entsprechend ausgewählt werden, daß sie ausreichende Leistung an den Flugkörper überträgt und die von ihr emittierte Laserstrahlung in den zwischen Flugkörper und Versorgungsstation liegenden Luftschichten wenig absorbiert wird. Die photoelektrische Umwandlungsvorrichtung ist vorzugsweise auf den Empfang der übertragenen Laserstrahlung optimiert. Entsprechend wird vorzugsweise eine IR-Laserquelle verwendet, und die photoelektrische Umwandlungsvorrichtung ist vorzugsweise so optimiert, daß sich im IR-Bereich ein möglichst hoher Wirkungsgrad ergibt. In Fällen, in denen die Laserleistung zu einem zu hohen Anteil durch die zwischen Flugkörper und terrestrischer Versorgungsstation liegenden Luftschichten absorbiert wird, ist es auch möglich, eine auf einem Unterstützungsflugzeug angebrachte Versorgungsstation zu verwenden. Dabei kann eine solche fliegende Versorgungsstation selbst wieder als eine Informationsplattform eingesetzt werden.

Die Verwendung einer Laserlichtquelle zur Energieversorgung des Flugkörpers ist gegenüber herkömmlichen Energieversorgungstechniken, beispielsweise mit Mikrowellenenergie dahingehend vorteilhaft, daß bei den herkömmlichen Energieversorgungstechniken außerhalb des engen Strahlungsbündels auch Strahlung mit relativ hoher Intensität vorhanden ist, so daß weitere Empfänger in der Nähe von Versorgungsstation und/oder Flugkörper gestört werden können. Insbesondere können durch die Strahlung außerhalb des Mikrowellen-Strahlungsbündels auch Menschen beeinträchtigt werden. Dieser Nachteil wird bei der Energieversorgung mit Laserlicht vermieden, da Laserlicht stärker gebündelt ist.

Eine realistische Leistung zur Versorgung des Flugkörpers beträgt einige 10 kW, diese Leistung kann durch Solarzellenpanele mit einer Gesamtfläche von ungefähr 100 m² bereitgestellt werden.

Der erfindungsgemäße Flugkörper umfaßt ferner Einrichtungen, um den Flugkörper auf einer vorgegebenen Längen- und Breitenposition zu halten. Diese umfassen vorzugsweise eine Vorrichtung zum Bestimmen der aktuellen Längen- und Breitenposition sowie eine Vorrichtung zum Korrigieren der aktuellen Längen- und Breitenposition. Dabei umfaßt die Vorrichtung zum Bestimmen der aktuellen Längen- und Breitenposition vorzugsweise ein satellitenunterstütztes Ortungssystem, beispielsweise ein GPS-System. Ferner kann der erfindungsgemäße Flugkörper eine Vorrichtung zur Feinbestimmung der aktuellen Längen- und Breitenposition umfassen, die vorzugsweise derart gestaltet ist, daß sie bestimmt, ob der Flugkörper in seiner aktuellen Position die maximal übertragbare Energie erhält und, falls dies nicht der Fall ist, bestimmt, an welcher Stelle der Flugkörper die maximal übertragbare Energie erhalten würde, so daß die korrekte Position leicht ermittelt werden kann. Unter Verwendung einer Vorrichtung zum Korrigieren der aktuellen Längen- und Breitenposition, die beispielsweise einen in der Raumfahrt üblichen Rückstoßantrieb, z.B. lonenstrahlantrieb, oder aber auch, bei niedrigeren Höhen, einen aerodynamischen Antrieb, z.B. einen Propellerantrieb umfaßt, kann der Flugkörper dann die vorgegebene Position einnehmen.

Alternativ ist es natürlich auch möglich, die Strahlungsquelle dergestalt nachzuführen, daß der Flugkörper seine Position nicht verändert, aber die maximal übertragbare Energie erhält.

Der erfindungsgemäße Flugkörper kann auch als Ring ausgebildet sein und eine Drehbewegung um die zentrale Ringachse ausführen. Dadurch wird seine Lage weiter stabilisiert.

Der erfindungsgemäße Flugkörper kann durch eine, beispielsweise an der Versorgungsstation angebrachte Fernsteuerung gesteuert werden, so daß er seine Arbeitsposition einnimmt oder verläßt. Dabei kann er mit Hilfe einer Hilfsvorrichtung, beispielsweise einem Trägerflugzeug, in die gewünschte Position gebracht werden. Der Abstieg kann dann mit Hilfe eines Fallschirms erfolgen.

Zusätzlich oder auch alternativ kann der Flugkörper aber auch noch einen Mechanismus zur autonomen Selbststeuerung umfassen. Dieser steuert dann selbsttätig den Flugkörper, bis er die Arbeitsposition erreicht hat und sich stabilisiert hat, und bewirkt autonom die sichere Landung des Flugkörpers an einem vorgegebenem Ort.

Die Kombination einer Fernsteuerung mit einem Mechanismus zur autonomen Selbststeuerung hat dabei den Vorteil, daß selbst bei einer externen Störung oder Beschädigung der Flugkörper, wenn er beispielsweise keinen Kontakt mit der Fernsteuerung mehr hat, sicher an einen vorgegebenen Ort zurückkehren kann.

Eine erfindungsgemäße mobile Informationsübertragungsstation umfaßt einen Flugkörper nach Anspruch 1 und darüber hinaus mindestens eine Sende- und mindestens eine Empfangseinrichtung.

Eine derartige mobile Informationsübertragungsstation hat den Vorteil, daß sie im Vergleich zu den derzeit verwendeten Satelliten preisgünstig ist und daß sie Information mit geringen Sendeleistungen übertragen kann. Dadurch muß der auf dem Flugkörper angebrachte Sender über die Sendeantenne keine hohen Leistungen (< 1 kW) abstrahlen, und auch die von den einzelnen Empfängern, beispielsweise am Boden oder in einem Satellit, verwendeten Empfangseinrichtungen müssen nicht hochempfindlich sein. Dadurch können die allgemein verwendeten Informationsübertragungssysteme weiter verbilligt werden. Desweiteren ist solch eine Informationsübertragungsstation recht mobil. Je nach Bedarf, beispielsweise bei für weite Bevölkerungskreise hochinteressanten Ereignissen (Olympische Spiele usw.) können derartige Informationsübertragungsstationen lokal schnell und ohne großen Aufwand installiert werden und nach Ende der Veranstaltung wieder abgebaut werden. Der Abbau kann beispielsweise erfolgen, indem der Flugkörper analog der Landung eines Segelflugzeugs zur Erde zurückkehrt.

Befehle oder Zusatzinformationen an die Informationsübertragungsstation können dabei wie bei den üblichen Satellitensystemen übermittelt werden.

Da die erfindungsgemäßen Flugkörper leicht handhabbar sind, ist es zusätzlich möglich, sie kurzfristig auf die Erde zurückzuholen, um sie zu warten, reparieren oder um Verbesserungen vorzunehmen. Entsprechend müssen die zur Herstellung des Flugkörpers, der Informationsübertragungsstation oder der Datenerfassungs- und -übertragungsstation verwendeten Komponenten nicht den strengen Anforderungen der Weltraumelektronik genügen, sondern die Anforderungen an die Industrieelektronik sind ausreichend. Dadurch werden die Herstellungskosten für die entsprechenden Teile verringert, und sie sind auch in Massenproduktion bei kürzeren Vorlaufzeiten herstellbar.

Der erfindungsgemäße Flugkörper kann darüber hinaus auch Sensoren zur Erfassung von physikalischen oder chemischen Meßwerten sowie von Bildinformation sowie mindestens eine Einrichtung zum Senden der erfaßten Daten umfassen. Beispiele sind Sensoren zur Erfassung von Wetterdaten, Sensoren zur chemischen Untersuchung der Umgebungsluft, bildgebende Sensoren oder Vorrichtungen zur spektroskopischen Untersuchung der Atmosphäre. Beispielsweise kann ein Flugkörper, der in einer Höhe von ca. 100 bis 300 m positioniert ist, mit einer Kamera zur Aufnahme von Bildern bestückt sein, die dann die aufgenommenen Bilder an einen Empfänger sendet.

Insbesondere kann der erfindungsgemäße Flugkörper bei geeigneter Positionierung innerhalb der Stratosphäre zur Untersuchung der Ozonschicht herangezogen werden.

Der erfindungsgemäße Flugkörper ist dafür ausgelegt, daß er in einer Höhe bis in die Stratosphäre, vorzugsweise in einer Höhe von 25 bis 50 km ortsfest positioniert wird. In einer derartig hohen Höhe existiert eine stabile Luftschichtung, so daß die in den unteren Luftschichten üblichen Turbulenzen weitgehend vermieden sind. Er ist aber auch in anderen Höhen positionierbar. Beispielsweise kann er je nach Verwendungszweck auch in einer Höhe von ca. 100 bis 300 m positioniert werden.

Die vorliegende Erfindung wird im folgenden unter Bezugnahme auf die begleitenden Figuren konkreter beschrieben.
Fig. 1 zeigt einen Flugkörper gemäß einer Ausführungsform der vorliegenden Erfindung;
Fig. 2 zeigt einen Flugkörper gemäß einer weiteren Ausführungsform der vorliegenden Erfindung; und
Fig. 3 zeigt eine beispielhafte Anordnung von einzelnen Solarzellen bei einer weiteren Ausgestaltung des erfindungsgemäßen Flugkörpers.

In Figur 1 bezeichnet Bezugszeichen 1 ein Solarzellenpanel, Bezugszeichen 2 bezeichnet einen aerostatischen Auftriebskörper, der bei dieser Ausführungsform als ein Ring ausgebildet ist, Bezugszeichen 3 bezeichnet eine erste Drehachse, Bezugszeichen 4 einen Rahmen, und Bezugszeichen 5 bezeichnet eine zweite Drehachse. Das Solarzellenpanel ist derartig in dem erfindungsgemäßen Flugkörper aufgehängt, daß es um 360° schwenkbar ist und somit seine aktive Fläche beliebig positioniert werden kann. Durch Bereitstellen der beiden Achsen 3 und 5 sowie des Rahmens 4 kann beispielsweise bewirkt werden, daß trotz eventuell auftretender Kräfte das Solarzellenpanel stabil positioniert bleibt. Die weiteren Komponenten des Flugkörpers, beispielsweise die Einrichtungen, die geeignet sind, den Flugkörper auf einer vorgegebenen Längen- und Breitenposition zu halten, oder Sensoren können in dem Rahmen 4 vorgesehen sein. Wird der Flugkörper als mobile Informationsübertragungsstation oder Datenerfassungs- und -übertragungsstation eingesetzt, können dafür wesentliche Komponenten ebenfalls in dem Rahmen 4 vorgesehen sein.

In Fig. 2 bezeichnet Bezugzeichen 1 wieder die Solarzellenpanele, während Bezugszeichen 2 die Auftriebskörper, diesmal in Form eines kugelförmigen Ballons, bezeichnet. Bei dieser Ausführungsform können die Solarzellenpanele beispielsweise jeweils in gegenläufiger Bewegung um 180° gedreht werden, so daß der Flugkörper insgesamt stabil bleibt. Zusätzlich kann eine Einrichtung zur Stabilisierung des Flugkörpers durch eine geeignete Schwerpunktsverschiebung wie vorstehend beschrieben vorgesehen sein.

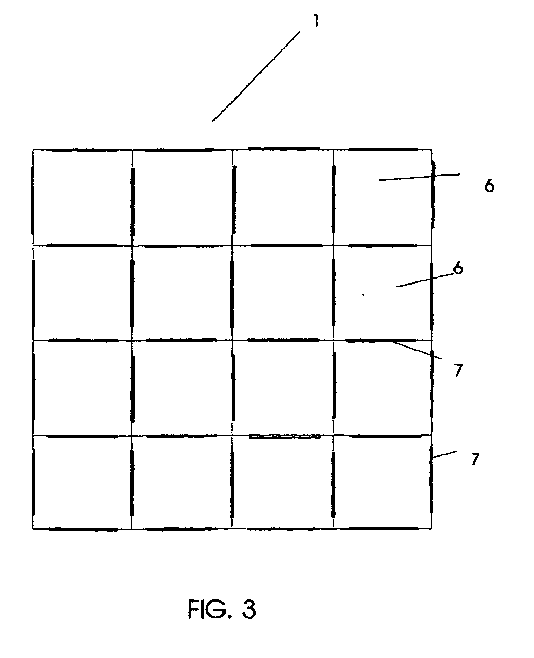

Fig. 3 zeigt eine weitere Ausführungsform der vorliegenden Erfindung, bei der die Halterung der Solarzellen gleichzeitig als eine HF-Empfangseinrichtung wirkt. Dabei können die einzelnen Solarzellen wie in Fig. 1 oder 2 gezeigt in einem Solarzellenpanel angeordnet sein. Zusätzlich können aber auch noch weitere Komponenten beispielsweise zur kardanischen Lagerung vorgesehen sein.

In Fig. 3 bezeichnen die Bezugzeichen 6 die einzelnen Solarzellen, die das Solarzellenpanel 1 aufbauen. Die einzelnen Solarzellen 6 sind durch Halterungselemente 7 miteinander verbunden, und die Halterungselemente 7 wirken als HF-Antennen.

## Patentansprüche

1. Flugkörper zum im wesentlichen ortsfesten Aufenthalt bis in die Stratosphäre, mit
- Einrichtungen (2), die geeignet sind, den Flugkörper unter Ausnutzung des aerostatischen Auftriebs und/oder von aerodynamischen Effekten auf einer vorgegebenen Höhe zu halten;
- Einrichtungen, die geeignet sind, den Flugkörper auf einer vorgegebenen Längen- und Breitenposition zu halten; und
- Mitteln, um den Flugkörper von einer Versorgungsstation aus drahtlos über elektromagnetische Wellen mit Energie zu versorgen,
wobei
die Mittel mindestens eine photoelektrische Umwandlungsvorrichtung (1) umfassen, die schwenkbar ist, so daß die aktive Fläche der photoelektrischen Umwandlungsvorrichtung (1) optimal in Richtung einer einfallenden Energieeinstrahlung positioniert werden kann.

2. Flugkörper nach Anspruch 1, bei dem die photoelektrische Umwandlungseinrichtung (1) derartig ausgebildet ist, daß ihre aktive Fläche einerseits in Richtung der Sonne, andererseits in Richtung einer Versorgungsstation ausgerichtet werden kann, um jeweils deren Strahlung in elektrische Energie umzuwandeln.

3. Flugkörper nach Anspruch 2, **dadurch gekennzeichnet, daß** der Schwenkvorgang, bei dem die aktive Fläche zur Versorgungsstation hin positioniert wird, durch das Unterschreiten eines vorbestimmten Einstrahlungs-Grenzwerts ausgelöst wird.

4. Flugkörper nach einem der vorhergehenden Ansprüche, bei dem die Mittel zur drahtlosen Energieversorgung ferner mindestens eine an dem Flugkörper angebrachte Hochfrequenz-Empfangseinrichtung umfassen.

5. Flugkörper nach Anspruch 4, **dadurch gekennzeichnet, daß** die an dem Flugkörper angebrachte Hochfrequenz-Empfangseinrichtung und die photoelektrische Umwandlungsvorrichtung (1) eine Einheit bilden.

6. Flugkörper nach Anspruch 5, **dadurch gekennzeichnet, daß** die an dem Flugkörper angebrachte Hochfrequenz-Empfangseinrichtung als Halterungselement für die photoelektrische Umwandlungsvorrichtung (1) dient.

7. Flugkörper nach Anspruch 5 oder 6, **dadurch gekennzeichnet, daß** die an dem Flugkörper angebrachte Hochfrequenz-Empfangseinrichtung als Leitungselement für die photoelektrische Umwandlungsvorrichtung (1) dient.

8. Flugkörper nach einem der Ansprüche 5 bis 7, **dadurch gekennzeichnet, daß** die Hochfrequenz-Empfangseinrichtung eine Antenne ist, die derartig ausgestaltet ist, daß sie die empfangene Hochfrequenz-Leistung in Gleichstrom umwandelt.

9. Flugkörper nach einem der Ansprüche 5 bis 8, **dadurch gekennzeichnet, daß** die photoelektrische Umwandlungseinrichtung (1) derartig ausgebildet sind, daß der aus der empfangenen Hochfrequenz-Leistung gewonnene Gleichstrom und der von der photoelektrischen Umwandlungsvorrichtung (1) gewonnene Gleichstrom dieselbe Leitung speisen.

10. Flugkörper nach einem der vorhergehenden Ansprüche, ferner mit einer Energievorratseinrichtung, die die Energie liefert, damit der Flugkörper von der Versorgungsstation auf die vorgegebene Höhe aufsteigt.

11. Flugkörper nach einem der vorhergehenden Ansprüche, bei dem die Einrichtungen, die geeignet sind, den Flugkörper auf einer vorgegebenen Höhe zu halten, einen oder mehrere aerostatische Auftriebskörper (2) umfassen.

12. Flugkörper nach einem der vorhergehenden Ansprüche, dessen aerostatischer Auftriebskörper (2) sich erst entfaltet, sobald die vorgegebene Höhe erreicht ist.

13. Flugkörper nach Anspruch 12, **dadurch gekennzeichnet, daß** sich der oder die aerostatischen Auftriebskörper (2) aus einem aerodynamischen Flügel heraus entfalten.

14. Flugkörper nach einem der Ansprüche 11 bis 13, **gekennzeichnet durch** Mittel, um die Lage des Flugkörpers zu stabilisieren.

15. Flugkörper nach einem der Ansprüche 1 bis 10, bei dem die Einrichtungen, die geeignet sind, den Flugkörper auf einer vorgegebenen Höhe zu halten, einen oder mehrere aerodynamische Flügel umfassen.

16. Flugkörper nach einem der vorhergehenden Ansprüche, bei dem die Einrichtungen, die geeignet sind, den Flugkörper auf einer vorgegebenen Längen- und Breitenposition zu halten, eine Vorrichtung zum Bestimmen der aktuellen Längen- und Breitenposition sowie eine Vorrichtung zum Korrigieren der aktuellen Längen- und Breitenposition umfassen.

17. Flugkörper nach Anspruch 16, bei dem die Vorrichtung zum Bestimmen der aktuellen Längen- und Breitenposition ein GPS-System umfaßt.

18. Flugkörper nach Anspruch 16 oder 17, ferner mit einer Vorrichtung zur Feinbestimmung der aktuellen Längen- und Breitenposition, die eine Einrichtung umfaßt, die geeignet ist zu bestimmen, ob der Flugkörper den Ort der maximal übertragbaren Energie einnimmt.

19. Flugkörper nach einem der Ansprüche 16 bis 18, bei dem die Vorrichtung zum Korrigieren der aktuellen Längen- und Breitenposition einen Rückstoßantrieb und/oder einen aerodynamischen Antrieb umfaßt.

20. Flugkörper nach einem der vorhergehenden Ansprüche, der als Ring ausgebildet ist und Mittel zum Ausführen einer Drehbewegung um die zentrale Ringachse umfaßt.

21. Flugkörper nach einem der vorhergehenden Ansprüche, ferner mit einem Mechanismus, der geeignet ist, einen autonomen Start- und/oder Landevorgang des Flugkörpers einzuleiten und/oder zu bewirken.

22. Flugkörper nach einem der vorhergehenden Ansprüche, ferner mit einem oder mehreren Sensoren zur Erfassung von physikalischen und/oder chemischen Meßwerten sowie von Bildinformation.

23. Flugkörpersystem mit einem Flugkörper nach einem der vorhergehenden Ansprüche und einer Versorgungsstation.

24. Flugkörpersystem nach Anspruch 23, **gekennzeichnet durch** eine an der Versorgungsstation angebrachte Laserlichtquelle.

25. Flugkörpersystem nach Anspruch 23 oder 24**, gekennzeichnet durch** eine an der Versorgungsstation angebrachte Hochfrequenz-Sendeeinrichtung und Einrichtungen zum Einkoppeln von Hochfrequenz-Leistung aus der Hochfrequenz-Sendeeinrichtung.

26. Flugkörpersystem nach einem der Ansprüche 23 bis 25, **dadurch gekennzeichnet, daß** die Versorgungsstation Mittel umfaßt, die eine Nachführung des Energiestrahls zur Versorgung des Flugkörpers mit elektromagnetischer Energie bewirken.

27. Mobile Informationsübertragungsstation mit einem Flugkörper nach einem der Ansprüche 1 bis 22, wobei der Flugkörper mindestens eine Sende- und mindestens eine Empfangseinrichtung enthält.

28. Mobile Datenerfassungs- und -übertragungsstation mit einem Flugkörper nach Anspruch 22 und mindestens einer Einrichtung zum Senden der erfaßten Daten.

29. Informationsübertragungssystem mit einer mobilen Informationsübertragungsstation nach Anspruch 27 und einer Versorgungsstation.

30. Datenerfassungs- und -übertragungssystem mit einer mobilen Datenerfassungs- und -übertragungsstation nach Anspruch 28 und einer Versorgungsstation.

## Revendications

1. Aérodyne destiné au positionnement sensiblement stationnaire jusque dans la stratosphère, comportant
- des dispositifs (2), qui sont appropriés pour maintenir l'aérodyne à une altitude prédéterminée en utilisant la sustentation aérostatique et/ou l'effet aérodynamique ;
- des dispositifs, qui sont appropriés pour maintenir l'aérodyne sur une position en latitude et en longitude prédéterminée ; et
- des moyens pour alimenter sans fil l'aérodyne en énergie à partir d'une station d'alimentation par l'intermédiaire d'ondes électromagnétiques ;
les moyens comprenant au moins un dispositif de conversion photoélectrique (1) pivotant, de sorte que la surface active du dispositif de conversion photoélectrique (1) puisse être positionnée de façon optimale en direction d'un rayonnement énergétique incident.

2. Aérodyne selon la revendication 1, dans le cas duquel le dispositif de conversion photoélectrique (1) est agencé de telle sorte que sa surface active puisse être orientée, d'une part en direction du soleil, d'autre part en direction d'une station d'alimentation, afin de convertir leur rayonnement respectif en énergie électrique.

3. Aérodyne selon la revendication 2, **caractérisé en ce que** le processus de pivotement, lors duquel la surface active est positionnée vers la station d'alimentation, est déclenché par la non atteinte d'une valeur limite prédéterminée de rayonnement.

4. Aérodyne selon l'une des revendications précédentes, dans le cas duquel les moyens pour l'alimentation sans fil en énergie comportent en outre au moins un dispositif récepteur haute fréquence fixé sur l'aérodyne.

5. Aérodyne selon la revendication 4, **caractérisé en ce que** le dispositif récepteur haute fréquence fixé sur l'aérodyne et le dispositif de conversion photoélectrique (1) constituent une unité.

6. Aérodyne selon la revendication 5, **caractérisé en ce que** le dispositif récepteur haute fréquence fixé sur l'aérodyne sert d'élément de retenue pour le dispositif de conversion photoélectrique (1).

7. Aérodyne selon la revendication 5 ou 6, **caractérisé en ce que** le dispositif récepteur haute fréquence fixé sur l'aérodyne sert d'élément directionnel pour le dispositif de conversion photoélectrique (1).

8. Aérodyne selon l'une des revendications 5 à 7, **caractérisé en ce que** le dispositif récepteur haute fréquence est une antenne, qui est équipée de telle sorte qu'elle convertisse la puissance haute fréquence reçue en courant continu.

9. Aérodyne selon l'une des revendications 5 à 8, **caractérisé en ce que** le dispositif de conversion photoélectrique (1) est agencé de telle sorte que le courant continu généré à partir de la puissance haute fréquence reçue, et le courant continu généré par le dispositif de conversion photoélectrique (1), alimentent la même ligne.

10. Aérodyne selon l'une des revendications précédentes, comportant en outre un dispositif de réserve d'énergie, qui délivre l'énergie permettant à l'aérodyne de monter de la station d'alimentation à l'altitude prédéterminée.

11. Aérodyne selon l'une des revendications précédentes, dans le cas duquel les dispositifs qui sont appropriés pour maintenir l'aérodyne à une altitude prédéterminée, comportent un ou plusieurs corps de sustentation aérostatiques (2).

12. Aérodyne selon l'une des revendications précédentes, dont le corps de sustentation aérostatique (2) ne se déploie que lorsque l'altitude prédéterminée est atteinte.

13. Aérodyne selon la revendication 12, **caractérisé en ce que** le ou les corps de sustentation aérostatiques (2) se déploient à partir d'une aile aérodynamique.

14. Aérodyne selon l'une des revendications 11 à 13, **caractérisé par** des moyens de stabilisation de la position de l'aérodyne.

15. Aérodyne selon l'une des revendications 1 à 10, dans le cas duquel les moyens qui sont appropriés pour maintenir l'aérodyne à une altitude prédéterminée, comprennent une ou plusieurs ailes aérodynamiques.

16. Aérodyne selon l'une des revendications précédentes, dans le cas duquel les dispositifs qui sont appropriés pour maintenir l'aérodyne sur une position en latitude et en longitude prédéterminée, comprennent un système pour la détermination de la position en latitude et en longitude réelle, ainsi qu'un système pour la correction de la position en latitude et en longitude réelle.

17. Aérodyne selon la revendication 16, dans le cas duquel le système pour la détermination de la position en latitude et en longitude réelle comporte un système GPS.

18. Aérodyne selon la revendication 16 ou 17, comportant par ailleurs un dispositif pour la détermination précise de la position en latitude et en longitude réelle, lequel comprend un système qui est approprié pour déterminer si l'aérodyne occupe l'emplacement de l'énergie maximale transmissible.

19. Aérodyne selon l'une des revendications 16 à 18, dans le cas duquel le système de correction de la position en latitude et en longitude réelle comporte une propulsion par réaction et/ou un entraînement aérodynamique.

20. Aérodyne selon l'une des revendications précédentes, lequel est agencé sous la forme d'un anneau, et comporte des moyens pour effectuer un mouvement de rotation autour de l'axe central de l'anneau.

21. Aérodyne selon l'une des revendications précédentes, comportant par ailleurs un mécanisme qui est approprié pour initier et/ou provoquer un processus de décollage et/ou d'atterrissage autonome de l'aérodyne.

22. Aérodyne selon l'une des revendications précédentes, comportant par ailleurs un ou plusieurs capteurs pour la saisie de valeurs de mesures physiques et/ou chimiques, ainsi que d'informations d'images.

23. Système d'aérodyne comportant un aérodyne selon l'une des revendications précédentes, et une station d'alimentation.

24. Système d'aérodyne selon la revendication 23, **caractérisé par** une source de lumière laser fixée sur la station d'alimentation.

25. Système d'aérodyne selon la revendication 23 ou 24, **caractérisé par** un dispositif émetteur haute fréquence fixé sur la station d'alimentation, et par des dispositifs pour coupler de la puissance haute fréquence provenant du dispositif émetteur haute fréquence.

26. Système d'aérodyne selon l'une des revendications 23 à 25, **caractérisé en ce que** la station d'alimentation comporte des moyens permettant d'orienter le rayonnement énergétique pour l'alimentation en énergie électromagnétique de l'aérodyne.

27. Station mobile de transmission d'informations avec un aérodyne selon l'une des revendications 1 à 22, l'aérodyne comportant au moins un dispositif émetteur et au moins un dispositif récepteur.

28. Station mobile de saisie et de transmission de données avec un aérodyne selon la revendication 22, et au moins un dispositif pour l'émission des données saisies.

29. Système de transmission d'informations avec une station mobile de transmission d'informations selon la revendication 27, et une station d'alimentation.

30. Système de saisie et de transmission de données avec une station mobile de saisie et de transmission de données selon la revendication 28, et une station d'alimentation.

## Claims

1. Flying body for essentially fixed stay as far as the stratosphere, having
- devices (2) which are suitable to keep the flying body at a preset height utilising the aerostatic lift and/or aerodynamic effects;
- devices which are suitable to keep the flying body at a preset length and width position; and
- means to supply the flying body with energy starting from a supply station in wireless manner via electromagnetic waves,
wherein the means comprise at least one photoelectric conversion device (1) which can be pivoted so that the active surface of the photoelectric conversion device (1) may be positioned in optimum manner in the direction of an incident energy radiation.

2. Flying body according to claim 1, in which the photoelectric conversion device (1) is designed such that its active surface may be aligned on the one hand in the direction of the sun, on the other hand in the direction of a supply station in order to convert in each case their radiation into electrical energy.

3. Flying body according to claim 2, **characterised in that** the pivoting process, in which the active surface is positioned towards the supply station, is triggered by a predetermined radiation limiting value not being reached.

4. Flying body according to one of the preceding claims, in which the means for wireless energy supply also comprise at least one high-frequency receiving device attached to the flying body.

5. Flying body according to claim 4, **characterised in that** the high-frequency receiving device attached to the flying body and the photoelectric conversion device (1) form a unit.

6. Flying body according to claim 5, **characterised in that** the high-frequency receiving device attached to the flying body serves as a mounting element for the photoelectric conversion device (1).

7. Flying body according to claim 5 or 6, **characterised in that** the high-frequency receiving device attached to the flying body serves as a conducting element for the photoelectric conversion device (1).

8. Flying body according to one of claims 5 to 7, **characterised in that** the high-frequency receiving device is an antenna, which is designed such that it converts the received high-frequency power into direct current.

9. Flying body according to one of claims 5 to 8, **characterised in that** the photoelectric conversion device (1) are designed such that the direct current recovered from the received high-frequency power and the direct current recovered by the photoelectric conversion device (1) supply the same line.

10. Flying body according to one of the preceding claims, also having an energy-supply device, which provides energy so that the flying body rises from the supply station to the preset height.

11. Flying body according to one of the preceding claims, in which the devices which are suitable to keep the flying body at a preset height, comprise one or more aerostatic floats (2).

12. Flying body according to one of the preceding claims, the aerostatic floats (2) of which are not deployed until the preset height is reached.

13. Flying body according to claim 12, **characterised in that** the aerostatic float or floats (2) are deployed from an aerodynamic wing.

14. Flying body according to one of claims 11 to 13, **characterised by** means to stabilise the position of the flying body.

15. Flying body according to one of claims 1 to 10, in which the devices which are suitable to keep the flying body at a preset height, comprise one or more aerodynamic wings.

16. Flying body according to one of the preceding claims, in which the devices which are suitable to keep the flying body at a preset length and width position comprise a device for determining the current length and width position and a device for correcting the current length and width position.

17. Flying body according to claim 16, in which the device for determining the current length and width position comprises a GPS system.

18. Flying body according to claim 16 or 17, also having a device for fine determination of the current length and width position, which comprises a device which is suitable for determining whether the flying body occupies the site of maximum transferable energy.

19. Flying body according to one of claims 16 to 18, in which the device for correcting the current length and width position comprises a reaction drive and/or an aerodynamic drive.

20. Flying body according to one of the preceding claims, which is designed as a ring and comprises means for executing a rotary movement around the central ring axis.

21. Flying body according to one of the preceding claims, also having a mechanism which is suitable for introducing and/or effecting an autonomic take-off and/or landing procedure of the flying body.

22. Flying body according to one of the preceding claims, also having one or more sensors for recording physical and/or chemical measured values and image information.

23. Flying body system having a flying body according to one of the preceding claims and a supply station.

24. Flying body system according to claim 23, **characterised by** a laser light source attached to the supply station.

25. Flying body system according to claim 23 or 24, **characterised by** a high-frequency transmitting device attached to the supply station and devices for coupling high-frequency power from the high-frequency transmitting device.

26. Flying body system according to one of claims 23 to 25, **characterised in that** the supply station comprises means which effect tracking of the energy beam for supplying the flying body with electromagnetic energy.

27. Mobile information transfer station having a flying body according to one of claims 1 to 22, wherein the flying body contains at least one transmitting and at least one receiving device.

28. Mobile data-recording and data-transfer station having a flying body according to claim 22 and at least one device for transmitting the recorded data.

29. Information transfer system having a mobile information transfer station according to claim 27 and a supply station.

30. Data-recording and data-transfer system having a mobile data-recording and data-transfer station according to claim 28 and a supply station.
